# EUROPEAN PATENT SPECIFICATION

(11) **EP 1 971 626 B1**
(45) Date of publication and mention of the grant of the patent: **04.03.2009**
(21) Application number: 07709584.2
(22) Date of filing: 09.01.2007
(51) Int. Cl.: C08G 18/80, C09D 175/04

(54) **NON-AQUEOUS, LIQUID COATING COMPOSITIONS**
NICHTWÄSSRIGE FLÜSSIGBESCHICHTUNGSZUSAMMENSETZUNGEN
COMPOSITIONS D'ENROBAGE LIQUIDES NON AQUEUSES

(30) Priority: 09.01.2006 US 757238 P
(43) Date of publication of application: 24.09.2008
(73) Proprietor: E.I. DU PONT DE NEMOURS AND COMPANY, Wilmington, DE 19898 (US)
(72) Inventor: FLOSBACH, Carmen, 42287 Wuppertal (DE); FEY, Thomas, 55128 Mainz (DE); RENKES, Tanja, 45239 Essen (DE)
(74) Representative: Blum, Joachim
(86) International application number: PCT/US2007/000358
(87) International publication number: WO 2007/081846

(56) References cited:
- JP-A- 8 109 349
- US-A- 3 475 200

## Description

### Field of the Invention

The invention relates to novel non-aqueous, liquid coating compositions which contain hydroxyl-functional polyurethane binder(s) and crosslinking agents for the hydroxyl-functional polyurethane binder(s).

### Description of the Prior Art

Non-aqueous, liquid coating compositions based on hydroxyl-functional binders and crosslinking agents for the hydroxyl-functional binders are known. Examples are corresponding one- or two-component coating systems (c.f. European Coatings Handbook, Curt R. Vincentz Verlag, Hannover, 2000, page 66).

US-3 475 200 describes coating compositions comprising hydroxy-functional polyurethanes as hydroxy-functional binders in a non-aqueous, liquid paste. The hydroxy-functional polyurethanes are not in the form of particles and no melting point is indicated.

It has now been found that the per se known non-aqueous, liquid coating compositions based on hydroxyl-functional binders and crosslinking agents for the'hydroxyl-functional binders may be improved if they contain, instead of the hitherto conventional hydroxyl-functional binders, a specific kind of hydroxyl-functional polyurethane resin(s) as the only hydroxyl-functional binder(s). It is, for example, possible to, achieve a high solids content of the coating compositions, favorable sagging properties (even at elevated temperatures), and improved technological properties, in particular, good stone chip resistance and good scratch resistance, of the coating layers produced with the coating compositions. In particular, outstanding storage stability of the coating compositions can be achieved. Even when free polyisocyanates are used as crosslinking agents, the coating compositions exhibit unusually longer pot and processing lives than is normally expected.

### Summary of the Invention

The invention is directed to non-aqueous, liquid coating compositions which contain at least one hydroxyl-functional polyurethane resin A as the only hydroxyl-functional binder(s) and at least one crosslinking agent B with groups reactive with the hydroxyl groups of A, wherein the at least one polyurethane resin A is present as particles having a melting temperature of 40 to 180°C, in particular, 60 to 160°C.

### Detailed Description of the Embodiments

The coating compositions according to the invention are liquid, contain organic solvent(s) and have a solids content of, for example, 40 to 85 wt.%, preferably of 45 to 75 wt.%.

The solids content of the coating compositions according to the invention consists of the resin solids content and the following optional components: pigments, fillers (extenders) and non-volatile additives.

The resin solids content of the coating compositions according to the invention comprises the binder solids content comprising the at least one hydroxyl-functional polyurethane resin A as the only hydroxyl-functional binder(s) and the at least one crosslinking agent B. In particular, the resin solids content of the coating compositions according to the invention consists of 50 to 80 wt.% of the binder solids content comprising the at least one hydroxyl-functional polyurethane resin A as the only hydroxyl-functional binder(s), 20 to 50 wt.% of one or more crosslinking agents B and 0 to 30 wt.% of one or more components C, wherein the weight percentages add up to 100 wt.%. It is preferred, that the resin solids content does not comprise any component(s) C and that it consists of 50 to 80 wt.% of the binder solids content consisting of the at least one hydroxyl-functional polyurethane resin A and 20 to 50 wt.% of one or more crosslinking agents B, wherein the weight percentages add up to 100 wt.%.

The polyurethane resins A are hydroxyl-functional resins, which are present in the coating compositions according to the invention as particles, in particular with a non-spherical shape, and have a melting temperature of 40 to 180°C, in particular 60 to 160°C. The melting temperatures are not in general sharp melting points, but instead the upper end of melting ranges with a breadth of, for example, 30 to 150°C. The melting ranges and thus the melting temperatures may be determined, for example, by DSC (differential scanning calorimetry) at heating rates of 10 K/min. The polyurethane resins A have hydroxyl values of, for example, 50 to 300 mg KOH/g.

The polyurethane resins A are insoluble or virtually insoluble in the coating compositions and are present therein as particles. The polyurethane resins A are only very slightly, if at all, soluble in organic solvents conventional in coatings, the solubility amounting, for example, to less than 10, in particular less than 5 g per litre of butyl acetate at 20°C.

The production of hydroxyl-functional polyurethane resins is known to the person skilled in the art; in particular, they may be produced by reacting polyisocyanate(s) with polyol(s) in the excess. Polyols suitable for the production of the polyurethane resins A are not only polyols in the form of low molar mass compounds defined by empirical and structural formula but also oligomeric or polymeric polyols with number-average molar masses of, for example, up to 800, for example, corresponding hydroxyl-functional polyethers, polyesters or polycarbonates; low molar mass polyols defined by an empirical and structural formula are, however, preferred. The person skilled in the art selects the nature and proportion of the polyisocyanates and polyols for the production of polyurethane resins A in such a manner that polyurethane resins A with the above-mentioned melting temperatures and the above-mentioned solubility behavior are obtained.

All the number-average molar mass data stated in the present description are number-average molar masses determined or to be determined by gel permeation chromatography (GPC; divinylbenzene-crosslinked polystyrene as the immobile phase, tetrahydrofuran as the liquid phase, polystyrene standards).

The hydroxyl-functional polyurethane resins A may be produced in the presence of a suitable organic solvent (mixture), which, however, makes it necessary to isolate the polyurethane resins obtained in this manner or remove the solvent therefrom. Preferably, the production of the polyurethane resins A is, however, carried out without solvent and without subsequent purification operations.

In a first preferred embodiment, the polyurethane resins A are polyurethane diols which can be prepared by reacting 1,6-hexane diisocyanate with a diol component in the molar ratio x : (x+1), wherein x means any desired value from 2 to 6, preferably, from 2 to 4, and the diol component is one single diol, in particular, one single (cyclo)aliphatic diol with a molar mass in the range of 62 to 600, or a combination of diols, preferably two to four, in particular two or three diols, wherein in the case of a diol combination each of the diols preferably constitutes at least 10 mol % of the diols of the diol component. In the case of a diol combination, it is preferred, that at least 70 mol %, in particular, 100 mol % of the diols are (cyclo)aliphatic diols, each with a molar mass in the range of 62 to 600.

The term "(cyclo)aliphatic" used in the description and the claims encompasses cycloaliphatic, linear aliphatic, branched aliphatic and cycloaliphatic with aliphatic residues. Diols differing from (cyclo)aliphatic diols accordingly comprise aromatic or araliphatic diols with aromatically and/or aliphatically attached hydroxyl groups. One example is bisphenol A. Diols differing from (cyclo)aliphatic diols may furthermore comprise oligomeric or polymeric diols with number-average molar masses of, for example, up to 800, for example, corresponding polyether, polyester or polycarbonate diols.

The production of the polyurethane diols can be carried out in the presence of a suitable organic solvent (mixture), followed by isolation of the polyurethane diols so prepared. Preferably, the production of the , polyurethane diols is carried out without solvent and without subsequent purification operations.

1,6-hexane diisocyanate and the diol component are reacted stoichiometrically with one another in the molar ratio x mol 1,6-hexane diisocyanate : (x+1) mol diol, wherein x means any desired value from 2 to 6, preferably from 2 to 4.

One single diol, in particular, one single (cyclo)aliphatic diol with a molar mass in the range of 62 to 600 is used as the diol component. It is also possible to use a combination of diols, preferably two to four, in particular two or three diols, wherein each of the diols preferably constitutes at least 10 mol % of the diols of the diol component and wherein it is further preferred, that at least 70 mol %, in particular 100 mol % of the diols are (cyclo)aliphatic diols, each with a molar mass in the range of 62 to 600.

In the case of the diol combination, the diol component may be introduced as a mixture of its constituent diols or the diols constituting the diol component may be introduced individually into the synthesis. It is also possible to introduce a proportion of the diols as a mixture and to introduce the remaining proportion or proportions in the form of pure diol. Each of the diols preferably constitutes at least 10 mol % of the diols of the diol component.

Examples of diols which are possible as one single diol of the diol component are ethylene glycol, the isomeric propane- and butanediols, 1,5-pentanediol, 1,6-hexanediol, 1,10-decanediol, 1,12-dodecanediol, 1,4-cyclohexanedimethanol, hydrogenated bisphenol A and dimer fatty alcohol.

Examples of diols which are possible as constituents of the diol component are telechelic (meth)acrylic polymer diols, polyester diols, polyether diols, polycarbonate diols, each with a number-average molar mass of, for example, up to 800 as representatives of oligomeric or polymeric diols, bisphenol A as a representative of low molar mass non-(cyclo)aliphatic diols defined by empirical and structural formula and ethylene glycol, the isomeric propane- and butanediols, 1,5-pentanediol, 1,6-hexanediol, 1,10-decanediol, 1,12-dodecanediol, neopentyl glycol, butylethylpropanediol, the isomeric cyclohexanediols, the isomeric cyclohexanedimethanols, hydrogenated bisphenol A, tricyclodecanedimethanol, and dimer fatty alcohol as representatives of (cyclo)aliphatic diols defined by empirical and structural formula with a low molar mass in the range of 62 to 600.

1,6-ₕexane diisocyanate and the diol component are preferably reacted together in the absence of solvents. The reactants may here all be reacted together simultaneously or in two or more synthesis stages. When the synthesis is performed in multiple stages, the reactants may be added in the most varied order, for example, also in succession or in alternating manner. The diol component may, for example, be divided into two or more portions, for example, such that 1,6-hexane diisocyanate is initially reacted with part of the diol component before further reaction with the remaining proportion of the diol component. The individual reactants may in each case be added in their entirety or in two or more portions. The reaction is exothermic and proceeds at a temperature above the melting temperature of the reaction mixture. The reaction temperature is, for example, 60 to 200°C. The rate of addition or quantity of reactants added is accordingly determined on the basis of the degree of exothermy and the liquid (molten) reaction mixture may be maintained within the desired temperature range by heating or cooling.

Once the reaction carried out in the absence of solvent is complete and the reaction mixture has cooled, solid polyurethane diols are obtained. When low molar mass diols defined by empirical and structural formula are used for synthesis of the polyurethane diols, their calculated molar masses are in the range of 522 or above, for example, up to 2200.

The polyurethane diols assume the form of a mixture exhibiting a molar mass distribution. The polyurethane diols do not, however, require working up and may be used directly as hydroxyl-functional polyurethane resins A.

In a second preferred embodiment, the polyurethane resins A are polyurethane diols which can be prepared by reacting a diisocyanate component and a diol component in the molar ratio x : (x+1), wherein x means any desired value from 2 to 6, preferably, from 2 to 4, wherein 50 to 80 mol % of the diisocyanate component is formed by 1,6-hexane diisocyanate, and 20 to 50 mol % by one or two diisocyanates, each forming at least 10 mol % of the diisocyanate component and being selected from the group consisting of toluylene diisocyanate, diphenylmethane diisocyanate, dicyclohexylmethane diisocyanate, isophorone diisocyanate, trimethylhexane diisocyanate, cyclohexane diisocyanate, cyclohexanedimethylene diisocyanate and tetramethylenexylylene diisocyanate, wherein the mol % of the respective diisocyanates add up to 100 mol %, wherein 20 to 100 mol % of the diol component is formed by at least one linear aliphatic alpha,omega-C2-C12-diol, and 0 to 80 mol % by at least one diol that is different from linear aliphatic alpha,omega-C2-C12-diols, wherein each diol of the diol component preferably forms at least 10 mol % within the diol component, and wherein the mol % of the respective diols add up to 100 mol %.

The production of the polyurethane diols can be carried out in the presence of a suitable organic solvent (mixture), followed by isolation of the polyurethane diols so prepared. Preferably, the production of the polyurethane diols is carried out without solvent and without subsequent purification operations.

The diisocyanate component and the diol component are reacted stoichiometrically with one another in the molar ratio x mol diisocyanate : x+1 mol diol, wherein x represents any value from 2 to 6, preferably from 2 to 4.

50 to 80 mol % of the diisocyanate component is formed by 1,6-hexane diisocyanate, and 20 to 50 mol % by one or two diisocyanates selected from the group consisting of toluylene diisocyanate, diphenylmethane diisocyanate, dicyclohexylmethane diisocyanate, isophorone diisocyanate, trimethylhexane diisocyanate, cyclohexane diisocyanate, cyclohexanedimethylene diisocyanate and tetramethylenexylylene diisocyanate, wherein if two diisocyanates are selected, each diisocyanate forms at least 10 mol % of the diisocyanates of the diisocyanate component. Preferably, the diisocyanate or the two diisocyanates, forming in total 20 to 50 mol % of the diisocyanate component, are selected from dicyclohexylmethane diisocyanate, isophorone diisocyanate, trimethylhexane diisocyanate, cyclohexane diisocyanate, cyclohexanedimethylene diisocyanate and tetramethylenexylylene diisocyanate.

The diol component consists to an extent of 20 to 100 mol% of at least one linear aliphatic alpha,omega-C2-C12-diol and to an extent of 0 to 80 mol% of at least one diol differing from linear aliphatic alpha,omega-C2-C12-diols. The diol component preferably consists of no more than four different diols, in particular only of one to three diols. In the case of only one diol, it accordingly comprises a linear aliphatic alpha,omega-C2-C12-diol. In the case of a combination of two, three or four diols, the diol component consists to an extent of 20 to 100 mol%, preferably of 80 to 100 mol%, of at least one linear aliphatic alpha,omega-C2-C12-diol and to an extent of 0 to 80 mol%, preferably of 0 to 20 mol% of at least one diol differing from linear aliphatic alpha,omega-C2-C12-diols and preferably, also from alpha,omega-diols with more than 12 carbon atoms. The at least one diol differing from linear aliphatic alpha,omega-C2-C12-diols and preferably, also from alpha,omega-diols with more than 12 carbon atoms comprises in particular (cyclo)aliphatic diols defined by empirical and structural formula and with a low molar mass in the range of 76 to 600. The proportion of possible non-(cyclo)aliphatic diols preferably amounts to no more than 30 mol% of the diols of the diol component. In the case of a diol combination, each diol preferably makes up at least 10 mol% of the diol component.

Preferably, the diol component does not comprise any non- . (cyclo)aliphatic diols. Most preferably, it does not comprise any diols that are different from linear aliphatic alpha,omega-C2-C12-diols, but rather consists of one to four, preferably, one to three, and in particular only one linear aliphatic alpha,omega-C2-C12-diol.

In the case of the diol combination, the diol component may be introduced as a mixture of its constituent diols or the diols constituting the diol component may be introduced individually into the synthesis. It is also possible to introduce a proportion of the diols as a mixture and to introduce the remaining proportion or proportions in the form of pure diol. Each of the diols preferably constitutes at least 10 mol % of the diols of the diol component.

Examples of linear aliphatic alpha,omega-C2-C12-diols that may be used as one single diol or as constituents of the diol component are ethylene glycol, 1,3-propanediol, 1,4-butanediol, 1,5-pentanediol, 1,6-hexanediol, 1,10-decanediol and 1,12-dodecanediol.

Examples of diols that are different from linear aliphatic alpha,omega-C2-C12-diols and may be used in the diol component are telechelic (meth)acrylic polymer diols, polyester diols, polyether diols, polycarbonate diols, each with a number-average molar mass of, for example, up to 800 as representatives of oligomeric or polymeric diols, bisphenol A as a representative of low molar mass non-(cyclo)aliphatic diols defined by empirical and structural formula and those isomers of propanediol-and butanediol that are different from the isomers of propanediol and butanediol specified in the preceding paragraph, as well as, neopentyl glycol, butyl ethyl propanediol, the isomeric cyclohexanediols, the isomeric cyclohexanedimethanols, hydrogenated bisphenol A, tricyclodecanedimethanol, and dimer fatty alcohol as representatives of (cyclo)aliphatic diols defined by empirical and structural formula with a low molar mass in the range of 76 to 600.

The diisocyanates of the diisocyanate component and the diol or diols of the diol component are preferably reacted together in the absence of solvents. The reactants may here all be reacted together simultaneously or in two or more synthesis stages. When the synthesis is performed in multiple stages, the reactants may be added in the most varied order, for example, also in succession or in alternating manner. The diol component may, for example, be divided into two or more portions or into individual diols, for example, such that the diisocyanates are initially reacted with part of the diol component before further reaction with the remaining proportion of the diol component. Equally, however, the diisocyanate component may also be divided into two or more portions or into the individual diisocyanates, for example, such that the hydroxyl components are initially reacted with part of the diisocyanate component and finally with the remaining proportion of the diisocyanate component. The individual reactants may in each case be added in their entirety or in two or more portions. The reaction is exothermic and proceeds at a temperature above the melting temperature of the reaction mixture. The reaction temperature is, for example, 60 to 200°C. The rate of addition or quantity of reactants added is accordingly determined on the basis of the degree of exothermy and the liquid (molten) reaction mixture may be maintained within the desired temperature range by heating or cooling.

Once the reaction carried out in the absence of solvent is complete and the reaction mixture has cooled, solid polyurethane diols are obtained. When low molar mass diols defined by empirical and structural formula are used for synthesis of the polyurethane diols, their calculated molar masses are in the range of 520 or above, for example, up to 2200.

The polyurethane diols assume the form of a mixture exhibiting a molar mass distribution. The polyurethane diols do not, however, require working up and may be used directly as hydroxyl-functional polyurethane resins A.

If, in individual cases, a proportion of the diol component used for the synthesis of those polyurethane diols according to the preferred embodiments stated above is replaced by a triol component comprising at least one triol, polyurethane resins A are obtained which are branched and/or more highly hydroxyl-functional compared to the respective polyurethane diols. Embodiments with such polyurethane resins A are themselves further preferred embodiments. For example, up to 70% of the diols of the diol component in molar terms may be replaced by the triol(s) of the triol component. Examples of triols usable as constituent(s) of a corresponding triol component are trimethylolethane, trimethylolpropane and/or glycerol. Glycerol is preferably used alone as a triol component.

The at least one hydroxyl-functional polyurethane resin A is present in particulate form, in particular in the form of particles with a non-spherical shape, in the coating compositions. The average particle size (mean particle diameter) of the polyurethane resin A particles determined by means of laser diffraction is, for example, 1 to 100 µm. The polyurethane resin A particles may be formed by grinding (milling) of the solid polyurethane resin(s) A; for example, conventional powder coat production technology may be used for that purpose. The polyurethane resin A particles may either be stirred or mixed as a ground powder into the per se liquid coating composition or liquid constituents thereof, wherein it is possible subsequently to perform additional wet grinding or dispersing of the polyurethane resin A particles, for example, by means of a bead mill, in the resultant suspension.

A further method for forming the polyurethane resin A particles involves hot dissolution of the at least one polyurethane resin A in an organic solvent (mixture) and subsequent polyurethane resin A particle formation during and/or after cooling, in particular, dissolving the at least one polyurethane resin A in a proportion or the entirety of the, solvent (mixture) with heating to the melting temperature or above, for example, to temperatures of 40 to above 180°C, whereupon the polyurethane resin A particles may form during and/or after the subsequent cooling. Thorough mixing or stirring is preferably performed during cooling. By using the method of hot dissolution and subsequent polyurethane resin A particle formation during and/or after cooling, it is in particular possible to produce polyurethane resin A particles with average particle sizes at the lower end of the range of average particle sizes, for example, in the range of 1 to 50 µm, in particular 1 to 30 µm.

As already stated, the coating compositions according to the invention contain one or more crosslinking agents B with groups reactive with the hydroxyl groups of the at least one polyurethane resin A. The crosslinking agent(s) B are not solid at room temperature, but instead, for example, liquid, and/or they are soluble in organic solvent (mixture). Crosslinking agents B soluble in organic solvent (mixture) are present in dissolved form in the coating compositions according to the invention containing organic solvent(s). The crosslinking agent(s) B comprise conventional crosslinking agents known to the person skilled in the art for coating systems based on hydroxyl-functional binders, for example, transesterification crosslinking agents; free or blocked polyisocyanate crosslinking agents; aminoplast resin crosslinking agents such as, melamine-formaldehyde resins; and/or trisalkoxycarbonyl aminotriazine crosslinking agents.

Within the group of the coating compositions according to the invention, those which are particularly advantageous are those containing crosslinking agents B which are particularly reactive with hydroxyl-functional binders, such as, for example, aminoplast resin crosslinking agents, among these, in particular, highly reactive melamine-formaldehyde resins, and, specifically, free polyisocyanates. Conventional coating compositions based on conventional hydroxyl-functional binders and said crosslinking agents which are particularly reactive with hydroxyl-functional binders are in fact distinguished by storage stability which is limited to a greater or lesser degree, and, even before the coating compositions are used as directed, a more or less rapid reaction occurs between the hydroxyl-functional binder and the crosslinking agent, which is manifested, for example, by an increase in the viscosity of the coating compositions: In the case of free polyisocyanate crosslinking agents, the storage stability is so short that the coating compositions have to be formulated and stored as a two-component system, i.e., the component containing the hydroxyl-functional binder and the component containing the free polyisocyanate can be mixed with one another only shortly or directly before application of the coating compositions; the sum of pot life plus processing life of the coating compositions after mixing amounts, for example, to only up to 4 hours.

In contrast, storage stability is substantially greater in the coating compositions according to the invention; it may, depending on the crosslinking agent B used, exceed 6 months, for example. Coating compositions according to the invention which contain aminoplast resin(s), in particular highly reactive melamine-formaldehyde resin(s), as crosslinking agent(s) B or in particular as the only crosslinking agent(s) B are thus preferred.

Such coating compositions according to the invention which are particularly preferred are those which contain free polyisocyanate(s) as crosslinking agent(s) B, in particular free polyisocyanate(s) as the only crosslinking agent(s) B; in such coating compositions, the sum of pot life plus processing life after mixing (when A and B are brought into contact) is, for example, up to 24 hours.

Examples of free polyisocyanates, which can be contained in the particularly preferred coating compositions according to the invention alone or in combination, are conventional polyisocyanates known to the person skilled in the art, such as, di- and/or polyisocyanates with aliphatically, cycloaliphatically, araliphatically and/or aromatically attached isocyanate groups.

Examples of diisocyanates are hexamethylene diisocyanate, tetramethylxylylene diisocyanate, isophorone diisocyanate, dicyclohexylmethane diisocyanate, cyclohexane diisocyanate, toluylene diisocyanate, and diphenylmethane diisocyanate.

Examples of polyisocyanates are those which contain heteroatoms in the residue linking the isocyanate groups. Examples of these-are polyisocyanates which comprise carbodiimide groups, allophanate groups, isocyanurate groups, urethane groups, acylated urea groups or biuret groups. The polyisocyanates have an isocyanate functionality higher than 2, such as, for example, polyisocyanates of the uretidione or isocyanurate type produced by di- and/or trimerization of the diisocyanates stated in the above paragraph. Further examples are polyisocyanates containing biuret groups produced by reaction of the diisocyanates stated in the above paragraph with water. Further examples are likewise polyisocyanates containing urethane groups produced by reaction with polyols.

Polyisocyanate crosslinking agents known for isocyanate-curable coating systems and based on hexamethylene diisocyanate, on isophorone diisocyanate and/or on dicyclohexylmethane diisocyanate are very highly - suitable as polyisocyanates. Examples are the per se known derivatives of these diisocyanates comprising biuret, urethane, uretidione and/or isocyanurate groups. Examples thereof may be found among the products known by the name Desmodur® sold by Bayer Material Science.

The coating compositions according to the invention may contain one or more further components C which contribute towards the resin solids content. The term "components C" encompasses components containing no hydroxyl groups, these components in particular comprising corresponding resins. Examples are physically drying resins or resins which may be chemically cured by reactions which proceed without involving hydroxyl groups.

One, some or each of components A, B and C may contain free-radically polymerizable olefinic double bonds. The coating compositions according to the invention may then be cured not only by the reaction of the hydroxyl groups of the at least one polyurethane resin A with the groups of the crosslinking agent(s) C which are reactive towards said hydroxyl groups, but additionally by free-radical polymerization of the olefinic double bonds, in particular by photochemically induced free-radical polymerization. Such compositions are also known as "dual-cure" coating compositions.

The coating compositions according to the invention contain organic solvent(s) and they have a solids content of, for example, 40 to 85 wt.%, preferably 45 to 75 wt.%. The organic solvent content is, for example, 15 to 60 wt.%, preferably 25 to 55 wt.%; the sum of the wt.-% of the solids content and the organic solvent content is here, for example, 90 to 100 wt.-% (any possible difference in the corresponding range of above 0 to 10 wt.-% to make up to the total of 100 wt.% is in general formed by volatile additives). The organic solvents are in particular conventional coating solvents, for example, glycol ethers, such as, butyl glycol, butyl diglycol, dipropylene glycol dimethyl ether, dipropylene glycol monomethyl ether, ethylene glycol dimethylether; glycol ether esters, such as, ethyl glycol acetate, butyl glycol acetate, butyl diglycol acetate, methoxypropyl acetate; esters, such as, butyl acetate, isobutyl acetate, amyl acetate; ketones, such as, methyl ethyl ketone, methyl isobutyl ketone, diisobutyl ketone, cyclohexanone, isophorone; alcohols, such as, methanol, ethanol, propanol, butanol; aromatic hydrocarbons, such as, xylene, Solvesso® 100 (mixture of aromatic hydrocarbons with a boiling range from 155°C to 185°C), Solvesso® 150 (mixture of aromatic hydrocarbons with a boiling range from 182°C to 202°C) and aliphatic hydrocarbons. Of course, the particularly preferred coating compositions according to the invention containing free polyisocyanate crosslinking agent(s) preferably contain no or only small proportions of isocyanate-reactive organic solvents, for example, less than 10 wt.%, relative to the entire organic solvent(s).

Apart from the solvents, the coating compositions may contain further conventional coating additives, for example, inhibitors, catalysts, levelling agents, wetting agents, anticratering agents, antioxidants and/or light stabilizers. The additives are used in conventional amounts known to the person skilled in the art. In case of dual cure coating compositions photoinitiators are contained in general.

The coating compositions may also contain transparent pigments, color-imparting and/or special effect-imparting pigments and/or fillers, for example, corresponding to a ratio by weight of pigment plus filler : resin solids content in the range from 0:1 to 2:1. Suitable color-imparting pigments are any conventional coating pigments of an organic or inorganic nature. Examples of inorganic or organic color-imparting pigments are titanium dioxide, iron oxide pigments, carbon black, azo pigments, phthalocyanine pigments, quinacridone pigments and pyrrolopyrrole pigments. Examples of special effect pigments are metal pigments, for example, of aluminum, copper or other metals, interference pigments, such as, for example, metal oxide-coated metal pigments, for example, iron oxide-coated aluminum, coated mica, such as, for example, titanium dioxide-coated mica, graphite effect-imparting pigments, iron oxide in flake form, liquid crystal pigments, coated aluminum oxide pigments, coated silicon dioxide pigments. Examples of fillers are silicon dioxide, aluminum silicate, barium sulfate, calcium carbonate and talc.

The coating compositions according to the invention are non-aqueous liquid coating compositions. However, it is also possible to prepare similar aqueous coating compositions which contain at least one polyurethane resin of the A type present as particles having a melting temperature of 40 to 180°C. In that case the crosslinking agents of the B type or suitable components of the C type may be converted into the aqueous phase, for example, with addition of external emulsifiers and water. Nonaqueous, but water-dilutable crosslinking agents of the B type or suitable components of the C type contain conventional hydrophilic groups. Examples of these are ' nonionic hydrophilic groups, such as polyethylene oxide units, and/or ionic groups or groups convertible into ionic groups. Such crosslinking agents or components C may be converted into the aqueous phase by addition of water or by addition of neutralizing agent and water. If an aqueous coating composition is produced it is preferred to add the at least one polyurethane resin of the A type to the at least one water-dilutable crosslinking agent of the B type and/or component C before converting the latter into the aqueous phase.

The coating compositions may be used for the production of single-layer coatings or for the production of one or more coating layers within a multilayer coating, such as, in particular, an automotive multilayer coating, either on an automotive body or on an automotive body part. This may relate to both original and repair coating applications. The coating compositions may in particular be used in pigmented form for the production of a primer surfacer layer or in pigment-free form for the production of an outer clear top coat layer or a transparent sealing layer of a multilayer coating. They may, for example, be used for the production of a clear top coat layer on a previously applied color-imparting and/or special effect-imparting predried base coat layer.

The coating compositions may be applied by means of conventional application methods, in particular by spraying onto any desired uncoated or precoated substrates, for example, of metal or plastics. The coating compositions according to the invention may exhibit low application viscosities at a comparatively high resin solids content. This is advantageous in the case of spray application, because it is possible then to use conventional spray application units, as are used for the application of liquid coatings in industrial coating facilities.

Once applied, layers of the coating compositions according to the invention may initially be flashed off to remove solvent, for example, for one to five minutes at 20 to 80°C. Thermal curing then proceeds at object temperatures above the melting temperature of the hydroxyl-functional polyurethane resin(s) A contained in the corresponding coating composition, for example, for 5 to 30 minutes at 40 to 220°C, for example, by baking. If the difference between the melting temperature and the actual curing temperature is sufficiently large, it is possible initially to effect only or substantially only the melting of the polyurethane resin A particles, before the actual crosslinking subsequently proceeds during and/or after a further increase in temperature to the curing temperature. During and/or after melting the polyurethane resin A particles the polyurethane resin A may become incorporated into the resin matrix.

If the coating compositions according to the invention are dual-cure coating compositions, thermal curing is combined with curing by free-radical polymerization of olefinic double bonds induced by irradiation with high-energy radiation, in particular UV radiation. Thermal curing and radiation curing may here proceed simultaneously or in any desired order. Melting of the polyurethane resin A particles must, however, be ensured prior to curing.

### Example

### Examples 1a to 1l (Preparation of Polyurethane Diols):

Polyurethane diols were produced by reacting HDI (1,6-hexane diisocyanate) or a mixture of HDI and DCMDI (dicyclohexylmethane diisocyanate) with one or more diols in accordance with the following general synthesis method:

One diol or a mixture of diols was initially introduced into a 2 litre four-necked flask equipped with a stirrer, thermometer and column and 0.01. wt.% dibutyltin dilaurate, relative to the initially introduced quantity of diol(s), were added. The mixture was heated to 80°C. HDI or a HDI/DCMDI mixture was then apportioned and a temperature was maintained so that the hot reaction mixture did not solidify. The reaction mixture was stirred until no free isocyanate could be detected (NCO content < 0.1 %). The hot melt was then discharged and allowed to cool and solidify.

The melting behavior of the resultant polyurethane diols was investigated by means of DSC (differential scanning calorimetry, heating rate 10 K/min).

Examples 1a to 1l are shown in Table 1. The Table states which reactants were reacted together in what molar ratios and the final temperature of the melting process measured by DSC is stated in °C.

**TABLE 1**

| Example | Mols HDI | Mols DCMDI | Mols diol A | Mols diol B | Mols diol C | Final temperature of the melting process |
|---|---|---|---|---|---|---|
| 1a | 2 | | 2 PROP | 1 HEX | | 131°C |
| 1b | 2 | | 1 PROP | 2 HEX | | 150°C |
| 1c | 2 | | 0.5 PROP | 2.5 HEX | | 147°C |
| 1d | 2 | | 3 PENT | | | 137°C |
| 1e | 3 | | 1.33 PENT | 1.33 PROP | 1.33 HEX | 118°C |
| 1f | 2 | | 1 PENT | 1 PROP | 1 HEX | 115°C |
| 1g | 2 | | 1 BPA | 2 HEX | | 149°C |
| 1h | 2 | | 0.1 DFA | 1.3 PROP | 1.6 HEX | 113°C |
| 1j | 1.5 | 0.5 | 1 PROP | 2 HEX | | 140°C |
| 1k | 1.5 | 0.5 | 1 PENT | 1 PROP | 1 HEX | 105°C |
| 1l | 1.5 | 0.5 | 3 PENT | | | 126°C |

| | | | | | | |
|---|---|---|---|---|---|---|
| BPA: bisphenol A DFA: dimer fatty alcohol HEX: 1,6-hexanediol PENT: 1,5-pentanediol PROP: 1,3-propanediol | | | | | | |

### Examples 2a to 2e (Preparation of Polyurethane Polyols):

Polyurethane polyols were produced by reacting HDI or a mixture of HDI and DCMDI with a mixture of GLY (glycerol) and one or more diols in accordance with the following general synthesis method:

The polyols were initially introduced into a 2 litre four-necked flask equipped with a stirrer, thermometer and column and 0.01 wt.% dibutyltin dilaurate, relative to the initially introduced quantity of polyols, were added. The mixture was heated to 80°C. HDI or a HDI/DCMDI mixture was then apportioned and a temperature was maintained so that the hot reaction mixture did not solidify. The reaction mixture was stirred until no free isocyanate could be detected (NCO content < 0.1 %). The hot melt was then discharged and allowed to cool and solidify.

The melting behavior of the resultant polyurethane polyols was investigated by means of DSC (differential scanning calorimetry, heating rate 10 K/min).

Examples 2a to 2e are shown in Table 2. The Table states which reactants were reacted together in what molar ratios and the final temperature, of the melting process measured by DSC is stated in °C.

**TABLE 2**

| Example | Mols HDI | Mols DCMDI | Mols GLY | Mols Diol A | Mols Diol B | Mols Diol C | Final temperature of the melting process |
|---|---|---|---|---|---|---|---|
| 2a | 2 | | 1 | 2 HEX | | | 130°C |
| 2b | 2 | | 2 | 1 HEX | | | 104°C |
| 2c | 2 | | 0.1 | 0.9 HEX | 1 PROP | 1 PENT | 114°C |
| 2d | 2 | | 1 | 1 HEX | 1 PENT | | 101°C |
| 2e | 1.5 | 0.5 | 1 | 2 HEX | | | 117°C |

| | | | | | | | |
|---|---|---|---|---|---|---|---|
| of Table 1 for abréviations. | | | | | | | |

### Example 3 (Production of a Clear Coat Composition and an Outer Clear Coat Layer of a Multi-Layer Coating for Comparison Purposes):

A base was prepared by mixing the following components:
- 61.6: pbw (parts by weight) of a 65 wt-% solution of a methacrylic copolymer (acid value 5 mg KOH/g, hydroxyl value 147 mg KOH/g) in a 2 : 1 mixture of Solvesso8 100 and butyl acetate
- 6.7: pbw of a 65 wt-% solutions of a branched polyester (acid value 41 mg KOH/g, hydroxyl value 198 mg KOH/g, number-average molecular mass 1000) in Solvesso® 100
- 5.3: pbw of ethoxypropyl acetate
- 6.8: pbw of Solvesso® 150
- 1.2: pbw of Tinuvin® 292 from Ciba (light protecting agent)
- 1.2: pbw of Tinuvin® 384 from Ciba (UV-absorber)
- 2.0: pbw of butyl acetate
- 4.3: pbw of butyl diglycol acetate
- 4.4: pbw of butyl glycol acetate
- 6.5: pbw of Solvesso® 100

A clear coat was prepared by mixing 100 pbw of the base with 50 pbw of a 68 wt-% solution of a polyisocyanate hardener mixture (isocyanurate of isophorone diisocyanate and isocyanurate of hexamethylene diisocyanate in a weight ratio of 2 : 1) in a 2 : 1 mixture of Solvesso® 100 and butyl acetate.

The initial flow time according to DIN EN ISO 2431 with a DIN 4 cup at 20°C was determined directly after mixing the base and the polyisocyanates hardener (28 seconds). The pot-life of the clear coat in terms of the time period for doubling the initial flow time was two hours.

A metal panel provided with a cataphoretic primer and a 35 µm thick hydroprimer surfacer layer applied thereto and baked was spray-coated with a black waterborne base coat in a dry layer thickness of 15 µm, flashed off for 5 minutes at 70°C and then spray-coated with the clear coat in a vertical position in a wedge shape with a layer thickness gradient from 10 µm to 70 µm dry layer thickness, and after 10 minutes flashing off at room temperature, baking was carried out for 30 minutes at 130°C (object temperature). The clear coat sag limit was visually determined.

### Examples 4a to 4i (Production of Clear Coat Compositions and Outer Clear Coat Layers of Multi-Layer Coatings According to the Invention):

Solid polyurethane diols of Examples 1a, d, e, f, h, k, l and solid polyurethane polyols of Examples 2a and 2d were in each case comminuted, ground and sieved by means of grinding and sieving methods conventional for the production of powder coatings and, in this manner, converted into binder powders with an average particle size of 50 µm (determined by means of laser diffraction).

Example 3 was repeated several times wherein the solutions of the hydroxyl-functional methacrylic copolymer and of the hydroxyl-functional polyester were replaced by a pulverulent polyurethane diol or polyurethane polyol prepared according to the procedure described in the preceding paragraph. The replacement was performed by substituting the pulverulent polyurethane diol or polyol for the solutions of the methacrylic copolymer and of the polyester in each case according to a 100 mol-% substitution of OH. The initial flow time was adjusted to the same value as in Example 3 by adding an appropriate amount of a 2 : 1 mixture of Solvesso® 100 and butyl acetate.

Pot-life and sag limit were determined under the same conditions as in Example 3.

Table 3 shows the pot-life and the measured sag limit in µm, with reference to Examples 3 and 4a to 4i.

**Table 3**

| Examples (OH-funct. polyurethane powder used) | Pot-life (hours) | Sag limit (µm) |
|---|---|---|
| 3(./.) | 2 | 33 |
| 4a(1a) | 7.5 | 42 |
| 4b(1d) | 10 | 40 |
| 4c(1e) | 8.5 | 40 |
| 4d (1f) | 7 | 39 |
| 4e (1h) | 6.5 | 41 |
| 4f(1k) | 7 | 39 |
| 4g (1l) | 8 | 40 |
| 4h (2a) | 8.5 | 40 |
| 4i (2d) | 6 | 39 |

## Claims

1. Non-aqueous, liquid coating compositions which contain at least one hydroxyl-functional polyurethane resin A as the only hydroxyl-functional binder(s) and at least one crosslinking agent B with groups reactive with the hydroxyl groups of A, wherein the at least one polyurethane resin A is present as particles having a melting temperature of 40 to 180°C.

2. The coating compositions of claim 1, wherein the solids content is 40 to 85 wt.%, the organic solvent content is 15 to 60 wt.% and the sum of the wt.-% of the solids content and the organic solvent content is 90 to 100 wt.-% and wherein the solids content consists of the resin solids content and the optional components: pigments, fillers and non-volatile additives.

3. z The coating compositions of claim 2, wherein the resin solids content consists of 50 to 80 wt.% of the binder solids content comprising the at least one hydroxyl-functional polyurethane resin A as the only hydroxyl-functional binder(s), 20 to 50 wt.% of one or more crosslinking agents B and 0 to 30 wt.% of one or more components C, wherein the weight percentages add up to 100 wt.%.

4. The coating compositions of any one of the preceding claims, wherein the melting temperature of the at least one polyurethane resin A is the upper end of a 30 to 150°C broad melting range.

5. The coating compositions of any one of the preceding claims, wherein the solubility of the at least one polyurethane resin A is less than 10 g per litre of butyl acetate at 20°C.

6. The coating compositions of any one of the preceding claims, wherein the average particle size of the polyurethane resin A particles determined by means of laser diffraction is 1 to 100 µm.

7. The coating compositions of any one of the preceding claims, wherein the polyurethane resin A particles are formed by grinding of the at least one solid polyurethane resin A or by hot dissolution of the at least one polyurethane resin A in a dissolution medium and subsequent polyurethane resin A particle formation during and/or after cooling.

8. The coating compositions of any one of the preceding claims, wherein the at least one polyurethane resin A is a polyurethane diol which can be prepared by reacting 1,6-hexane diisocyanate with a diol component in the molar ratio x : (x+1), wherein x means any desired value from 2 to 6, and the diol component is one single diol or a combination of diols.

9. The coating compositions of any one of claims 1 to 7, wherein the at least one polyurethane resin A is a polyurethane diol which can be prepared by reacting a diisocyanate component and a diol component in the molar ratio x : (x+1), wherein x means any desired value from 2 to 6, wherein 50 to 80 mol % of the diisocyanate component is formed by 1,6-hexane diisocyanate, and 20 to 50 mol % by one or two diisocyanates, each forcing at least 10 mol % of the diisocyanate component and being selected from the group consisting of toluylene diisocyanate, diphenylmethane diisocyanate, dicyclohexylmethane diisocyanate, isophorone diisocyanate, trimethylhexane diisocyanate, cyclohexane diisocyanate, cyclohexanedimethylene diisocyanate and tetramethylenexylylene diisocyanate, wherein the mol % of the respective diisocyanates add up to 100 mol %, wherein 20 to 100 mol % of the diol component is formed by at least one linear aliphatic alpha,omega-C2-C12-diol, and 0 to 80.mol % by at least one diol that is different from linear aliphatic alpha,omega-C2-C12-diols, wherein the mol % of the respective diols add up to 100 mol %.

10. The coating compositions of claim 8 or 9, wherein a proportion of the diol component is replaced by a triol component comprising at least one triol.

11. A process for the preparation of a coating layer, comprising the successive steps:
1) applying a coating layer from a coating composition of anyone of the preceding claims,
2) optionally, flashing off the applied coating layer to remove solvent, and
3) thermally curing the coating layer at an object temperature above the melting temperature of the at least one polyurethane resin A:

12. The process of claim 11, wherein the coating layer is selected from the group consisting of a single-layer coating and a coating layer within a multilayer coating.

13. The process of claim 12, wherein the coating layer within the multilayer coating is an automotive multilayer coating on a substrate selected from the group consisting of automotive bodies and automotive body parts.

14. The process of claim 13, wherein the coating layer is selected from the group consisting of a primer surfacer layer, an outer clear top coat layer and a transparent sealing layer.

## Patentansprüche

1. Nichtwässrige Flüssigbeschichtungszusammensetzungen, welche mindestens ein Hydroxyl-funktionelles Polyurethanharz A enthalten als das/die einzige/n Hydroxyl-funktionelle/n Bindemittel und mindestens ein Vernetzungsmittel B mit Gruppen, welche gegenüber den Hydroxylgruppen von A reaktiv sind, wobei das mindestens eine Polyurethanharz A vorliegt als Partikel mit einer Schmelztemperatur von 40 bis 180°C.

2. Die Beschichtungszusammensetzungen nach Anspruch 1, wobei der Feststoffgehalt 40 bis 85 Gew.-% beträgt, der Gehalt von organischem Lösungsmittel 15 bis 60 Gew.-% beträgt und die Summe der Gew.-% des Feststoffgehalts und des Gehalts an organischem Lösungsmittel 90 bis 100 Gew.-% beträgt und wobei der Feststoffgehalt aus dem Gehalt an Harz-Feststoffen besteht und wahlweise den folgenden Komponenten: Pigmenten, Füllstoffen und nicht-flüchtigen Zusatzstoffen.

3. Die Beschichtungszusammensetzungen nach Anspruch 2, wobei der Feststoffgehalt vom Harz aus 50 bis 80 Gew.-% des Feststoffgehalts vom Bindemittel besteht, umfassend das mindestens eine Hydroxyl-funktionelle Polyurethanharz A als das/die einzige/n Hydroxyl-funktionelle/n Bindemittel, aus 20 bis 50 Gew.-% eines oder mehrerer Vernetzungsmittel B und aus 0 bis 30 Gew.-% einer oder mehrerer Komponenten C, wobei die Gewichtsprozente sich zu 100 Gew.-% aufaddieren.

4. Die Beschichtungszusammensetzungen nach einem der vorangehenden Ansprüche, wobei die Schmelztemperatur des mindestens einen Polyurethanharzes A am oberen Ende eines breiten Schmelzbereiches von 30 bis 150°C liegt.

5. Die Beschichtungszusammensetzungen nach einem der vorangehenden Ansprüche, wobei die Löslichkeit des mindestens einen Polyurethanharzes A weniger als 10 g pro Liter Butylacetat bei 20°C beträgt.

6. Die Beschichtungszusammensetzungen nach einem der vorangehenden Ansprüche, wobei die durchschnittliche Partikelgröße der Polyurethanharz-A-Partikel 1 bis 100 µm beträgt, bestimmt mittels Laserdiffraktion.

7. Die Beschichtungszusammensetzungen nach einem der vorangehenden Ansprüche, wobei die Polyurethanharz-A-Partikel gebildet werden durch Mahlen des mindestens einen Polyurethanharzes A oder durch Heißlösung von dem mindestens einen Polyurethanharz A in einem Auflösungsmedium und nachfolgende Partikelbildung des Polyurethanharzes A während und/oder nach Abkühlung.

8. Die Beschichtungszusammensetzungen nach einem der vorangehenden Ansprüche, wobei das mindestens eine Polyurethanharz A ein Polyurethandiol ist, welches bereitet werden kann durch Umsetzung von 1,6-Hexandüsocyanat mit einer Diol-Komponente im molaren Verhältnis von x : (x+1), wobei x jeden gewünschten Wert von 2 bis 6 bedeutet, und die Diol-Komponente ein einzelnes Diol oder eine Kombination von Diolen ist.

9. Die Beschichtungszusammensetzungen nach einem der Ansprüche 1 bis 7, wobei das mindestens eine Polyurethanharz A eine Polyurethandiol ist, welches bereitet werden kann durch Umsetzung einer Diisocyanat-Komponente und einer Diol-Komponente im molaren Verhältnis x : (x+1), wobei x jeden gewünschten Wert von 2 bis 6 bedeutet, wobei 50 bis 80 Mol-% der Diisocyanat-Komponente gebildet wird durch 1,6-Hexandiisocyanat und 20 bis 50 Mol-% durch ein oder zwei Diisocyanate, von denen jedes mindestens 10 Mol-% der Diisocyanat-Komponente bildet und ausgewählt wird aus der Gruppe bestehend aus Toluylendiisocyanat, Diphenylmethandiisocyanat, Dicyclohexylmethandüsocyanat, Isophorondüsocyanat, Trimethylhexandüsocyanat, Cyclohexandüsocyanat, Cyclohexandimethylendüsocyanat und Tetramethylenxylylendiisocyanat, wobei die Mol-% der jeweiligen Diisocyanate sich zu 100 Mol-% aufaddieren, wobei 20 bis 100 Mol-% der Diolkomponente gebildet wird durch mindestens ein lineares aliphatisches alpha,omega-C2-C12-Diol, und 0 bis 80 Mol-% durch mindestens ein Diol, welches sich von linearen aliphatischen alpha,omega-C2-C12-Diolen unterscheidet, wobei die Mol-% der jeweiligen Diole sich zu 100 Mol-% aufaddieren.

10. Die Beschichtungszusammensetzungen nach Anspruch 8 oder 9, wobei ein Anteil der Diolkomponente ersetzt wird durch eine Triolkomponente, welche mindestens ein Triol umfasst.

11. Verfahren zur Bereitung einer Beschichtungsschicht, umfassend die aufeinanderfolgenden Schritte:
1) Auftragen einer Beschichtungsschicht aus einer Beschichtungszusammensetzung nach einem der vorangehenden Ansprüche,
2) wahlweise Abdunsten der aufgetragenen Beschichtungsschicht um Lösungsmittel zu entfernen und
3) thermische Härtung der Beschichtungsschicht bei einer Temperatur des Objekts oberhalb der Schmelztemperatur von dem mindestens einen Polyurethanharz A.

12. Das Verfahren nach Anspruch 11, wobei die Beschichtungsschicht ausgewählt wird aus der Gruppe bestehend aus einer Einzelschicht-Beschichtung und einer Beschichtungsschicht innerhalb einer Mehrschichten-Beschichtung.

13. Das Verfahren nach Anspruch 12, wobei die Beschichtungsschicht innerhalb der Mehrschichten-Beschichtung eine Automobil-Mehrschichtenbeschichtung auf einem Substrat ist, ausgewählt aus der Gruppe bestehend aus Automobilkarosserien und Automobilkarosserieteilen.

14. Das Verfahren nach Anspruch 13, wobei die Beschichtungsschicht ausgewählt wird aus der Gruppe bestehend aus einer Grundierungs-FüllerSchicht, einer äußeren klaren Deckbeschichtungsschicht und einer transparenten Versiegelungsschicht.

## Revendications

1. Compositions de revêtement liquides, non aqueuses qui contiennent au moins une résine de polyuréthane à fonction hydroxyle A comme les liant(s) à fonction hydroxyle unique(s) et au moins un agent de réticulation B avec des groupes réactifs avec les groupes hydroxyles de A, dans lesquelles la au moins une résine de polyuréthane A est présente sous forme de particules présentant une température de fusion de 40 à 180°C.

2. Compositions de revêtement selon la revendication 1, dans lesquelles la teneur en solides est de 40 à 85% en poids, la teneur en solvant organique est de 15 à 60% en poids et la somme des % en poids de la teneur en solides et de la teneur en solvant organique est de 90 à 100% en poids et dans lesquelles la teneur en solides est constituée de la teneur en solides de résine et des composants facultatifs: pigments, charges et additifs non volatils.

3. Compositions de revêtement selon la revendication 2, dans lesquelles la teneur en solides de résine est constituée de 50 à 80% en poids de la teneur en solides de liant comprenant la au moins une résine de polyuréthane à fonction hydroxyle A comme les liant(s) à fonction hydroxyle unique(s), de 20 à 50% en poids d'un ou de plusieurs agents de réticulation B et de 0 à 30% en poids d'un ou de plusieurs composants C, dans lesquelles les pourcentages en poids s'élèvent à 100% en poids.

4. Compositions de revêtement selon l'une quelconque des revendications précédentes, dans lesquelles la température de fusion de la au moins une résine de polyuréthane A est l'extrémité supérieure d'un large intervalle de fusion de 30 à 150°C.

5. Compositions de revêtement selon l'une quelconque des revendications précédentes, dans lesquelles la solubilité de la au moins une résine de polyuréthane A est inférieure à 10 g par litre d'acétate de butyle à 20°C.

6. Compositions de revêtement selon l'une quelconque des revendications précédentes, dans lesquelles la taille de particules moyenne des particules de la résine de polyuréthane A déterminée au moyen d'une diffraction laser est de 1 à 100 µm.

7. Compositions de revêtement selon l'une quelconque des revendications précédentes, dans lesquelles les particules de résine de polyuréthane A sont formées par le broyage de la au moins une résine de polyuréthane A solide ou par la dissolution à chaud de la au moins une résine de polyuréthane A dans un milieu de dissolution et la formation de particules de résine de polyuréthane A subséquente pendant et/ou après un refroidissement.

8. Compositions de revêtement selon l'une quelconque des revendications précédentes, dans lesquelles la au moins une résine de polyuréthane A est un polyuréthane diol qui peut être préparé en faisant réagir du 1,6-hexane diisocyanate avec un composant de diol dans le rapport molaire x:(x+1), où x signifie n'importe quelle valeur désirée de 2 à 6, et le composant de diol est un seul diol ou une combinaison de diols.

9. Compositions de revêtement selon l'une quelconque des revendications 1 à 7, dans lesquelles la au moins une résine de polyuréthane A est un polyuréthane diol qui peut être préparé en faisant réagir un composant de diisocyanate et un composant de diol dans le rapport molaire x:(x+1), où x signifie n'importe quelle valeur désirée de 2 à 6, où de 50 à 80% en moles du composant de diisocyanate sont formées par le 1,6-hexane diisocyanate et de 20 à 50% en moles par un ou deux diisocyanates, chacun formant au moins 10% en moles du composant de diisocyanate et étant choisi dans le groupe constitué de toluylène diisocyanate, de diphénylméthane diisocyanate, de dicyclohexylméthane diisocyanate, d'isophorone diisocyanate, de triméthylhexane diisocyanate, de cyclohexane diisocyanate, de cyclohexanediméthylène diisocyanate et de tétraméthylènexylylène diisocyanate, où le % en moles des diisocyanates respectifs s'élève à 100% en moles, où de 20 à 100% en moles du composant de diol sont formées par au moins un alpha,oméga-C2-C12-diol aliphatique linéaire et de 0 à 80% en moles par au moins un diol qui est différent d'alpha,oméga-C2-C12-diols aliphatiques linéaires, où le % en moles des diols respectifs s'élève à 100% en moles.

10. Compositions de revêtement selon la revendication 8 ou 9, dans lesquelles une proportion du composant de diol est remplacée par un composant de triol comprenant au moins un triol.

11. Procédé pour la préparation d'une couche de revêtement, comprenant les étapes successives:
1) d'application d'une couche de revêtement à partir d'une composition de revêtement selon l'une quelconque des revendications précédentes,
2) optionnellement, d'évaporation rapide de la couche de revêtement appliquée pour retirer le solvant, et
3) de durcissement thermique de la couche de revêtement à une température d'objet au-dessus de la température de fusion de la au moins une résine de polyuréthane A.

12. Procédé selon la revendication 11, dans lequel la couche de revêtement est choisie dans le groupe constitué d'un revêtement monocouche et d'une couche de revêtement dans un revêtement multicouche.

13. Procédé selon la revendication 12, dans lequel la couche de revêtement dans le revêtement multicouche est un revêtement multicouche automobile sur un substrat choisi dans le groupe constitué de carrosseries automobiles et de pièces de carrosseries automobiles.

14. Procédé selon la revendication 13, dans lequel la couche de revêtement est choisie dans le groupe constitué d'une couche d'apprêt surfaçant, d'une couche de revêtement de finition clair externe et d'une couche de scellement transparente.
